# EUROPEAN PATENT APPLICATION

(11) **EP 4 800 587 A1**
(43) Date of publication of application: **02.09.2026**
(21) Application number: 26161058.8
(22) Date of filing: 26.02.2026
(51) Int. Cl.: G06F 21/55, G06F 21/57, H04L 9/40

(54) **CENTRAL NODES DISCOVERY IN SECURITY KNOWLEDGE GRAPHS**

(30) Priority: 28.02.2025 US 202519067731
(71) Applicant: Microsoft Technology Licensing, LLC, Redmond, WA 98052 (US)
(72) Inventor: SALMAN, Tamer, Redmond, 98052 (US); BASASH, Lital, Redmond, 98052 (US); KARPOVSKY, Andrey, Redmond, 98052 (US); FEITELSON, Yotam Dan, Redmond, 98052 (US); PIROGOVSKY, Amir, Redmond, 98052 (US); LAHAV, Chen, Redmond, 98052 (US)
(74) Representative: CMS Cameron McKenna Nabarro Olswang LLP

(57) **Abstract**

Disclosed are techniques for determining the probability that a computing resource will be compromised during a cyberattack. In some configurations, a collection of computing resources is modeled with a resource graph. Computing resources are represented by nodes while connections between computing resources are represented by edges. Random walks are performed through the resource graph. Different random walk algorithms may be applied to identify different properties of the resource graph. For example, nodes that are visited frequently by the random walks may correspond to computing resources that are likely to be compromised during a cyberattack. Various security operations may be performed in response to determining that a computing resource is likely to be compromised, including increased security measures, introduction of honeypots or honeytokens, sending or prioritizing security alerts, etc.

## Description

### BACKGROUND

Centralizing the provisioning and management of computing resources reduces costs and improves availability. At the same time, a concentration of computing resources makes an inviting target for cyberattacks. Attacks often begin by gaining access to a single computing device. From this foothold, additional privileges, tokens, and other means of access are obtained, enabling the attack to continue to other devices. One strategy for limiting the reach of an attack is to identify and harden computing resources that are most likely to be compromised.

It is with respect to these and other considerations that the disclosure made herein is presented.

### SUMMARY

Disclosed are techniques for determining the probability that a computing resource will be compromised during a cyberattack. In some configurations, a collection of computing resources is modeled with a resource graph in which computing resources are represented by nodes while connections between computing resources are represented by edges. In some configurations, random walks are performed through the resource graph. Node visit counts are tallied and may be used as a measure of node centrality. Different random walk algorithms may be applied to identify different properties of the resource graph. For example, one random walk algorithm may identify central nodes that correspond to computing resources that are likely to be compromised during a cyberattack. Various security operations may be performed in response to determining that a computing resource is likely to be compromised, including increased security measures, introduction of honeypots or honeytokens, encrypting data stored on the computing resource, sending or prioritizing security alerts, etc.

Features and technical benefits other than those explicitly described above will be apparent from a reading of the following Detailed Description and a review of the associated drawings. This Summary is provided to introduce a selection of concepts in a simplified form that are further described below in the Detailed Description. This Summary is not intended to identify key or essential features of the claimed subject matter, nor is it intended to be used as an aid in determining the scope of the claimed subject matter. The term "techniques," for instance, may refer to system(s), method(s), computer-readable instructions, module(s), algorithms, hardware logic, and/or operation(s) as permitted by the context described above and throughout the document.

### BRIEF DESCRIPTION OF THE DRAWINGS

The Detailed Description is described with reference to the accompanying figures. In the figures, the left-most digit(s) of a reference number identifies the figure in which the reference number first appears. The same reference numbers in different figures indicate similar or identical items. References made to individual items of a plurality of items can use a reference number with a letter of a sequence of letters to refer to each individual item. Generic references to the items may use the specific reference number without the sequence of letters.
FIG. 1 illustrates extracting a subgraph from a resource graph and optionally weighting edges of the subgraph.
FIG. 2A illustrates stochastically traversing a subgraph and conditionally applying a security operation.
FIG. 2B illustrates different random walk algorithms and corresponding security operations as applied to a subgraph.
FIG. 3 illustrates a resource graph.
FIG. 4A illustrates a walkable subgraph of a resource graph.
FIG. 4B illustrates a weighted subgraph.
FIGS. 4C-4G illustrate paths discovered by random walks performed on a weighted subgraph.
FIG. 4H illustrates how many times nodes of a subgraph were visited during random walks.
FIG. 5A illustrates an edge-reversed subgraph.
FIGS. 5B-5C illustrate paths discovered by random walks performed on a weighted edge-reversed subgraph.
FIG. 5D illustrates how many times nodes of a weighted edge-reversed subgraph were visited during random walks.
FIG. 6 illustrates how many times nodes of a data-movement subgraph were visited during random walks.
FIG. 7 is a flow diagram of an example method for a feature discovery layer.
FIG. 8 is a computer architecture diagram illustrating an illustrative computer hardware and software architecture for a computing system capable of implementing aspects of the techniques and technologies presented herein.

### DETAILED DESCRIPTION

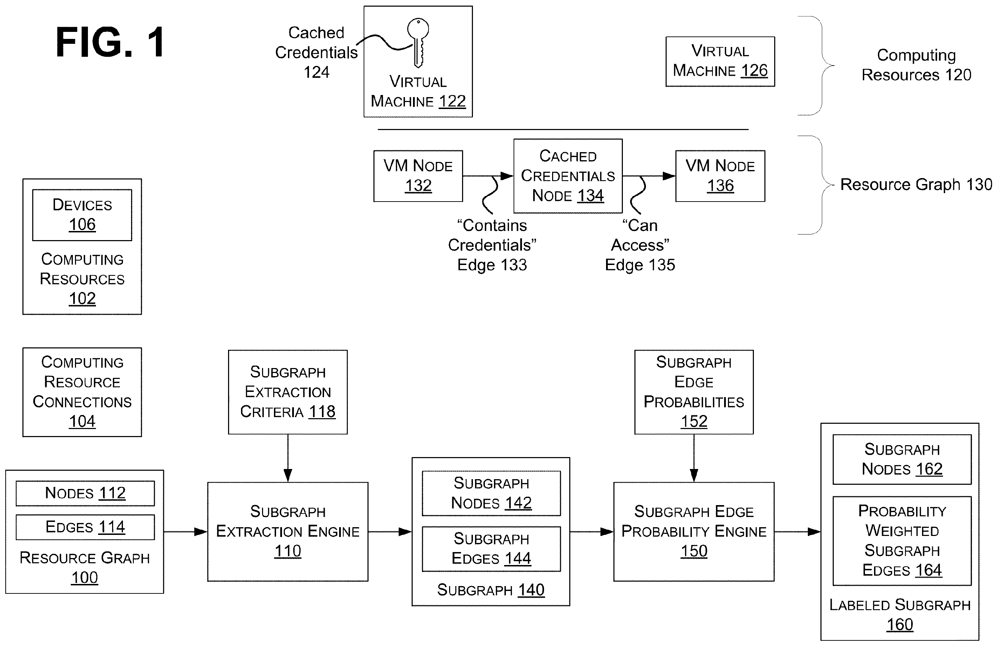

FIG. 1 illustrates subgraph extraction engine 110 applying subgraph extraction criteria 118 to obtain subgraph 140 from resource graph 100. Resource graph 100 represents a comprehensive model of computing resources 102, providing a holistic view of computing resources 102 and connections 104 between those computing resources 102. Collections of computing resources 102 are often found at a corporate office or as part of cloud computing infrastructure.

Subgraph extraction criteria 118 creates subgraph 140 by strategically selecting portions of resource graph 100 that are relevant to a particular type of security analysis. In this way, subgraph 140 represents a particular dimension of resource graph 100, allowing the security analysis to be focused on a particular security concern while avoiding nodes and edges that are unrelated to the question at hand. Subgraph 140 tends to include fewer nodes and edges than resource graph 100, and so an additional benefit of performing a security analysis on subgraph 140 is increased efficiency and reduced processing requirements.

Resource graph 100 includes nodes 112 that represent computing resources 102 and edges 114 that represent computing resource connections 104. Computing resources 102 may refer to physical computing devices, virtual devices, computing services, software applications, authentication information, users and groups, threat intelligence, and other information that is relevant to modeling the computing resources of an organization. Computing resource connections 104 represent how computing resources 102 connect or otherwise relate to one another, such as which software applications are installed on which devices, how to gain access from one device to another, how data flows through the devices, etc.

Subgraph 140 includes subgraph nodes 142 and subgraph edges 144 that are selected from nodes 112 and edges 114 of resource graph 100. For example, subgraph extraction criteria 118 determines which of edges 114 are selected for inclusion as subgraph edges 144 of subgraph 140. Similarly, subgraph extraction criteria 118 determines which of nodes 112 are selected for inclusion as subgraph nodes 142 of subgraph 140. In some configurations, subgraph extraction criteria 118 is applied to edges 114 while nodes 142 are identified secondarily as the endpoints of the selected subgraph edges 144.

In some configurations, subgraph edge probability engine 150 applies subgraph edge probabilities 152 to generate labeled subgraph 160 from subgraph 140. Specifically, some or all of subgraph edges 144 of subgraph 140 are associated with probabilities as probability weighted subgraph edges 164 of labeled subgraph 160. Weights are applied to subgraph edges 144 to model how likely an attacker is to move between computing resources.

Resource graph 130 is a simple example of a resource graph. Resource graph 130 represents computing resources 120. Computing resources 120 include virtual machine 122 and virtual machine 126. Cached credentials 124 are stored on virtual machine 122. Cached credentials 124 may be used to gain access to virtual machine 126.

Virtual machines 122 and 126 are represented in resource graph 130 by virtual machine node 132 and virtual machine node 136, respectively. Cached credentials 124 are represented by cached credentials node 134. "Contains credentials" edge 133 represents that virtual machine 122 stores cached credentials 124. Similarly, "Can access" edge 135 represents that cached credentials 124 can be used to gain access to VM 126.

As referred to herein, a path is a series of one or more contiguous edges and associated nodes. Paths through resource graph 100 may be analyzed to identify chokepoints or other security insights. Continuing the example of resource graph 130 and computing resources 120, an analysis of resource graph 130 may determine that virtual machine 126 stores sensitive data, and so cached credentials 124 stored on virtual machine 122 present a significant security risk. In order to mitigate this risk, system administrators may elect to require multi-factor authentication when logging-in to virtual machine 122 and/or virtual machine 126. Additionally, or alternatively, a security operation may be automatically taken to reduce this risk, such as purging cached credentials 124 from virtual machine 122.

However, merely identifying attack paths and chokepoints does not inform administrators how to prioritize countermeasures. Large numbers of virtual machines may be vulnerable, without a clear indication of which to address first. Other types of security alerts may also be active, some of which may have been raised by other security analysis systems. System administrators are not able to effectively prioritize their responses without additional information. Furthermore, security measures impose costs - monetary costs, time and effort, and user frustration must be balanced against improvements in security. System administrators are unable to accurately evaluate the cost-benefit analysis of applying a security measure to a computing device without knowing how likely it is that the device will be compromised. Moreover, it is time consuming and tedious for system administrators to manually respond to security alerts.

In some configurations, stochastic processes are used to evaluate a likelihood that a computing device 106 or other computing resource 102 will be compromised as part of a cyberattack. A computing resource 102 becomes compromised when an attacker surreptitiously takes control of the resource, such as logging-in to a virtual machine using a leaked username and password. Compromising a computing resource also refers to leveraging one resource to access another, such as using a secure shell (SSH) token to query a database.

Stochastic processes refer to iterative random processes, such as taking random walks over a graph. Stochastic processes are often used to obtain approximate results when an exhaustive search is infeasible. In some configurations, random walks are performed over labeled subgraphs 160 of resource graph 100. Various algorithms for performing the random walks may be employed, yielding different security insights. The number of times that a node is visited during a random walk indicates the centrality of that node for that walk. In this way, computing resources 102 may be ranked according to how central they as a security concern according to a selected stochastic algorithm as applied to a selected subgraph 140.

Subgraph extraction engine 110 applies subgraph extraction criteria 118 to extract subgraph 140 from resource graph 100. Subgraph extraction criteria 118 may include a criteria that is applied to edges 114 of resource graph 100. Subgraph extraction criteria 118 may identify particular edges, such as "contains credentials" edges, to be selected into subgraph 140. Additionally, or alternatively, subgraph extraction criteria 118 may include higher level descriptions of types of edges, such as edges that reflect data movement, edges that reflect logging-in, edges that reflect data encryption, etc. When subgraph extraction criteria 118 is based on edges, the generated subgraph 140 includes the identified subgraph edges 144. With this technique, subgraph nodes 142 are any nodes 112 that are connected to those edges. Additionally, or alternatively, subgraph extraction criteria 118 selects particular nodes 112 to be at least some of subgraph nodes 142. Subgraph nodes 142 may be selected by specific node type and/or by a higher level description of the node. Additionally, or alternatively, subgraph extraction criteria 118 may include a combination of edge and node selection criteria. Edge and node selection criteria may define edges and nodes to select into subgraph 140 as well as edges and nodes to exclude from subgraph 140.

Subgraph extraction criteria 118 are often constructed to focus on related types of operations. For example, subgraph extraction criteria 118 may select subgraph edges 144 and subgraph nodes 142 that are relevant to how an attacker may leverage one computing resource 122 to gain access another computing resource 126. This yields a "walkable" subgraph - a subgraph that represents how an attacker may proceed from one computing resource 102 to another.

Another subgraph extraction criteria 118 may select subgraph edges 144 and subgraph nodes 142 that are relevant to how data moves from one device to another. This "data movement" subgraph represents how data flows through the network, and may reveal where data is likely to end up during a cyberattack. Other types of subgraph extraction criteria 118 are similarly contemplated, such as for creating subgraphs relevant to privilege escalation, lateral movement, and redundancy and resilience.

Subgraph 140 is provided to subgraph edge probability engine 150, which labels subgraph edges 144 with subgraph edge probabilities 152. Subgraph edge probabilities 152 may define a per edge probability, indicating how likely an edge is to be taken from a given node on a random walk. Subgraph edge probabilities 152 may also be defined based on the types of the source and/or destination nodes. For example, "contains credentials" edge 133 may be weighted differently when the destination node represents cached login credentials than when the destination node represents an SSH token.

It is known to be very easy to use an SSH key - pasting an SSH key into a web browser is all it takes to access a resource protected by the SSH key. Due to its ease of use and general knowledge of this technique, this type of action will be assigned a high weight, as it is very probable that an attacker would take advantage of an available SSH key. But if the edge involves something that is difficult for an attacker to use, such as multi-factor authentication, then the edge will be assigned a low weight.

Subgraph edge probabilities 152 may be specific to the type of subgraph, such that subgraph edge probabilities 152 may be different for a "walkable" subgraph than for a "data movement" subgraph. This reflects different real-world probabilities that an edge will be taken when an attacker is moving laterally through computing devices than when data is being moved between computing devices.

Subgraph edge probability engine 150 generates labeled subgraph 160, which includes subgraph nodes 142 and probability weighted subgraph edges 164. Subgraph edge probability engine 150 may normalize the probabilities of edges leaving a given node. For example, subgraph edge probability engine 150 may ensure that the probabilities of edges leaving a given node sum to 1.

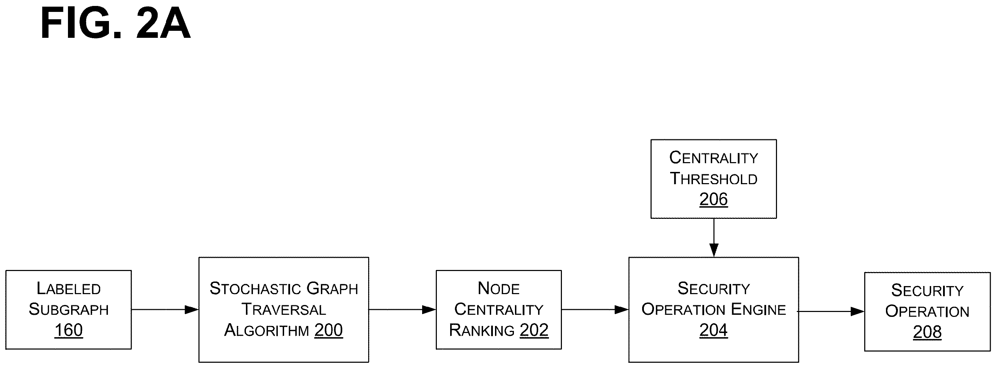

FIG. 2A illustrates stochastically traversing labeled subgraph 160 and conditionally applying security operation 208. Stochastic graph traversal algorithm 200 determines how random walks are performed over labeled subgraph 160.

In some configurations, stochastic graph traversal algorithm 200 determines how to select nodes with which to begin a random walk. For example, stochastic graph traversal algorithm 200 may select at random from subgraph nodes 162. Additionally, or alternatively, stochastic graph traversal algorithm 200 may bias the selection of the next starting node towards or away from particular nodes, particular types of nodes, nodes which have or have not already been used to begin a random walk, nodes that have or have not been included in a random walk, etc.

Stochastic graph traversal algorithm 200 also may determine how to extend a random walk. For example, stochastic graph traversal algorithm 200 may define a next edge to take in a walk, or a process for determining a next edge to take in a random walk. For instance, the next edge of a random walk may be selected at random from the list of possible edges that leave the current node. If probability weighted subgraph edges 164 have been labeled with probabilities, the selection may be based on these probabilities. In some configurations, stochastic graph traversal algorithm 200 may define specific types of edges or destination nodes to avoid. These exclusions, or biases against, may be apply conditionally or all of the time. Stochastic graph traversal engine 200 may indicate whether loops are allowed on a random walk - whether a walk may pass through a node more than once.

Stochastic graph traversal algorithm 200 may also determine when to stop adding edges to a particular walk. For instance, Stochastic graph traversal algorithm 200 may apply a maximum length, ceasing to add any more edges to a particular walk. Stochastic graph traversal algorithm 200 may similarly identify one or more node or edge types that by definition end a walk.

When one walk ends, stochastic graph traversal algorithm 200 determines whether to initiate a new random walk or whether to conclude the performance of random walks for the current session. In some configurations, stochastic graph traversal algorithm 200 stops performing random walks when walks over the current labeled subgraph 160 have converged. Convergence may be identified when relative node visitation statistics change less than a defined amount for a defined amount of time. For example, in configurations in which nodes are ranked by how many times they are visited by the random walks, convergence may be identified when at least 90% of node visitation rankings remain in the same order for 1,000 random walks. Convergence may also be identified when patterns of visitation counts become stable, such as when relative differences in visitation counts become more accentuated for at least a defined period of time.

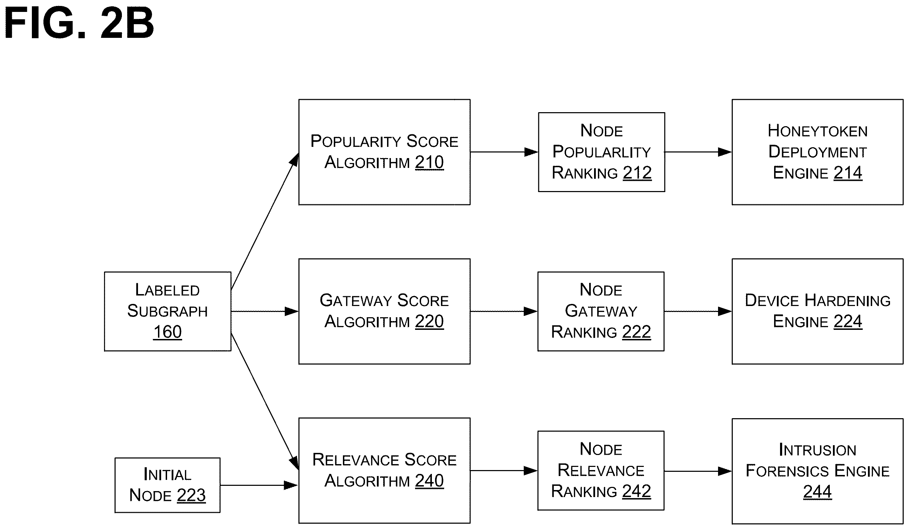

In some configurations, stochastic graph traversal algorithm 200 performs random walks, tracks how many times subgraph nodes 162 are visited, and generates node centrality rankings 202. Node centrality rankings may have different meanings based on the algorithm used to perform the random walks. Node centrality rankings 202 may also have different meanings based on the subgraph that stochastic graph traversal algorithm 200 was applied to - i.e., the types of probability weighted subgraph edges 164 and subgraph nodes 162 included in labeled subgraph 160. Additional examples and details of different types of stochastic graph traversal algorithms 200 are discussed below in conjunction with FIG. 2B. However, as a brief example, node centrality ranking 202 may in some configurations indicate how likely a node is to be compromised by an attacker during a cyberattack.

Stochastic models are often observed to converge on, highlight, or otherwise stabilize on particular patterns of node visitation counts. Specifically, the nature of performing random walks through subgraph 160 will tend to elucidate particular nodes and patterns of subgraph nodes 162 in subgraph 160.

Security operation engine 204 uses node centrality ranking 202 to perform security operation 208. In some configurations, security operation engine 204 applies centrality threshold 206 to determine whether a subgraph node 162 of labeled subgraph 160 has been visited enough to warrant applying security operation 208. In some configurations, multiple centrality thresholds 206 may be applied, affecting which security operation 208 is selected to be performed. Centrality threshold 206 may be a node visitation count.

Some security operations 208 are informational - such as an alert to a system administrator that an identified subgraph node 162 has a higher than normal probability of being compromised in an attack. Additionally, or alternatively, security operation 208 may be to affect a priority given to an alert generated by other criteria. For example, a different security analysis may determine that an SSH key is stored in plain text on a virtual machine. This is a risky security practice, but may be one among many of alerts generated on a given day. However, if node centrality ranking 202 for the virtual machine is high enough, security operation 208 may increase the priority of the SSH key in plain text alert, since the combination of an easy to exploit setup on a computing device that is likely to be compromised during an attack is of great importance to review.

Some security operations 208 automatically perform a security remediation. In the case of an active cyberattack, security operation 208 may disrupt the ongoing attack. For example, once it has been determined that a computing device is a probable starting point of an attack, security operation 208 may automatically require a more secure login procedure, such as a multi-factor authentication system, for the identified device.

FIG. 2B illustrates different random walk algorithms and corresponding security operations as applied to subgraph 160. Different random walk algorithms, such as popularity score algorithm 210, gateway score algorithm 220, and relevance score algorithm 240, may be applied independently or in conjunction with one another to subgraph 160. As illustrated, each algorithm performs random walks in different ways, including determining where to start a particular random walk, how long to continue a particular random walk, how long to continue a session of random walks, which edge to take next at a given node while on a random walk, etc.

Popularity score algorithm 210 performs random walks through labeled subgraph 160 to generate node popularity rankings 212. Popularity score algorithm 210 may be applied to different labeled subgraphs 160, such as a subgraph directed to lateral movement through computing resources, a subgraph directed to data movement through a network, or the like. For a walkable subgraph, node popularity ranking 212 generated by popularity score algorithm 210 may model how likely an attacker is to compromise a particular computing resource 102 while performing a cyberattack. Random walks may approximate the behavior of an attacker in part because attackers often do not know the full extent of the devices they gain access to or what resources will be available on the next device, and so their actions are in fact somewhat random. In some configurations, subgraph nodes 162 with high node popularity rankings 212 represents a collection of computing resources 102 the attacker is likely to compromise.

In some configurations, probability weighted subgraph edges 164 are directed, reflecting the reality that a relationship such as "can access" between a user identity node and a virtual machine node is only meaningful in one direction. However, sometimes it is possible to gain insight into a security configuration of computing devices by reversing the directions of probability weighted subgraph edges 164. Gateway score algorithm 220 reverses the directions of probability weighted subgraph edges 164 before performing random walks and counting node visits. However, instead of identifying popular nodes, node gateway rankings 222 identify nodes that are likely to be the first node compromised during a cyberattack. In some configurations, nodes that rank high on node gateway rankings 222 are nodes that allow access to a large number of other computing resources.

For some random walk algorithms, after a node is added to a random walk there is a probability that the current random walk will be deemed complete and the algorithm will jump at random to another node to begin another random walk. For example, some implementations of popularity score algorithm 210 use this technique to determine when a walk has ended. Relevance score algorithm 240, in contrast, does not select another node at random. Instead, relevance score algorithm 240 biases the selection of the next node towards one or more initial nodes 223. This biases the random walks to parts of resource graph 100 that are near initial node 223.

Relevance score algorithm 240 may be used to model what would happen if a particular VM was compromised by an attacker. In this example, initial node 223 would be the node representing the compromised VM. Similarly, relevance score algorithm 240 may be used retrospectively to identify a point of ingress when a particular device is found to have been compromised.

FIG. 2B illustrates three security operations that may be performed on subgraph nodes 162 that exceed a threshold - honeytoken deployment engine 214, device hardening engine 224, and intrusion forensics engine 244. These three security responses are illustrated as being applied to the results of popularity score algorithm 210, gateway score algorithm 220, and relevance score algorithm 240, respectively. However, these pairings are merely examples - additional security operations may be applied to any and all random walk algorithms, and any of the illustrated security operations may be applied to the outputs of the illustrated random walk algorithms, among others.

Honeytoken deployment engine 214 may protect one or more nodes that are ranked highly by a random walk algorithm. For example, if a database is determined to be a common target of attack, honeytokens may be deployed to computing devices used to gain access to the database. Specifically, honeytoken deployment engine 214 may deploy fake credentials, fake user identities, and other fake computing resources to computing devices that are commonly used to access the database. Then, during an attack, the attacker may attempt to use one of these fake credentials instead of using a real credential to access the database. In so doing, the attacker may trigger an automatic security response that locks down the database or other vulnerable computing resources. Honeytoken deployment engine 214 may similarly deploy honeypots - computing devices designed to ensnare attackers - where popularity score algorithm 210 indicates an attacker is likely to have access.

In some configurations, patterns of nodes and edges are revealed by iterative random walks. As a simplified example, consider nodes and edges that form a star - one node is connected to many other nodes. Random walks, even if they only begin on the distal nodes of the star, will encounter the central point of the star. By the layout of the nodes, each traversal will be to or from the central node, and so the central node will be visited more than the distal nodes. This example illustrates how even purely random walks, without weighted probabilities, can discover patterns of connectivity of resource graph 100.

One scenario that employs popularity score algorithm 210 is a lateral movement subgraph. A lateral movement subgraph may be selected to contain software, threat intelligence, computing devices, user identities, tokens such as SSH keys, store clouds, storage accounts, virtual machines, etc. A subgraph that is relevant for lateral movement may have edges such as "user can access SQL server using local password", or "VM contains an SSH key", and "SSH key can be used to connect to storage account". A longer path may include multiple edges, such as "user can access VM", "VM contains a token", "token can access another VM", etc. Security researchers may select the edges and/or nodes to include in a lateral movement subgraph. Security researchers may also define edge probability weights.

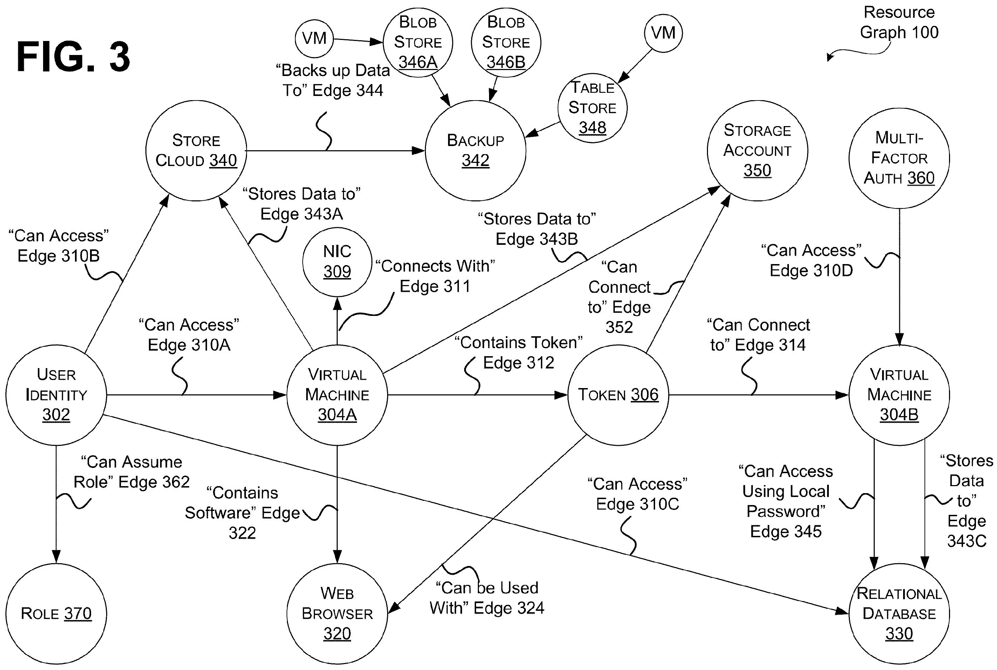

FIG. 3 illustrates resource graph 100. Subgraph nodes 162 are represented by circles, while probability weighted subgraph edges 164 are represented by lines. This is one non limiting example of a resource graph - other types of nodes and edges are similarly contemplated. User identity node 302 has four outgoing edges- "can access" edges 310A, 310B and 310C, and "can assume role" edge 362. User identity 302 may refer to user credentials, cached user credentials, a username and password, biometric identifying information, or the like. In many systems a user identity is usable to access other computing resources. As illustrated, user identity 302 is able to access virtual machine 304A, store cloud 340, and relational database 330 via "can access" edges 310A-C, respectively. "Can assume role" edge 362 indicates that user identity 302 can assume role 370. Role 370 may identify a group of users, such as users on a particular team or users in the same geographic location. Additionally, or alternatively, role 370 may afford additional permissions to the user, such as being a system administrator.

Virtual machine 304A is one example of a computing resource that may be accessed by user identity 302. A virtual machine refers to an instance of a guest operating system running on a hypervisor. Often virtual machines are remotely accessible. Multiple virtual machines may run on a single physical computing device, enabling efficient use of computing resources. While virtual machines are commonly used in cloud computing environments, the operations of virtual machine 304A are similar to the operations of a physical computing device.

Virtual machine 304A has five outgoing edges - "stores data to" edges 343A and 343B, "connects with" edge 311, "contains token" edge 312, and "contains software" edge 322. These edges connect virtual machine 304A to store cloud 340, storage account 3450, network interconnect (NIC) 309, token 306, and web browser 320 nodes, respectively.

The "stores data to" edges 343 indicate that virtual machine 304A is capable of, or has in the past, stored data to the corresponding resources. In this context, "stores data to" may refer to uploading a file to a store cloud such as DROPBOX, backing up data to a backup storage device, inserting rows into a relational database, or the like. "Connects with" edge 311 indicates that virtual machine 304A connects to other computing devices via NIC 309. "Contains software" edge 322 indicates that virtual machine 304A has web browser 320 installed.

Token 306 is a computing resource that can be used to access other computing resources. Token 306 may include a secret provided by a security authority upon authenticating successfully. Token 306 may be an SSH token, for example. As illustrated, token 306 has three outgoing edges - "can connect to" edge 352, "can connect to" edge 314, and "can be used with" edge 324, connecting to storage account 350, virtual machine 304B, and web browser 320, respectively. "Can connect to" edges 352 and 314 indicate that token 306 may be used to connect to the corresponding computing resources, enabling access. For example, an attacker may use token 306 to download a file from a storage bucket of storage account 350, or to gain access to virtual machine 304B.

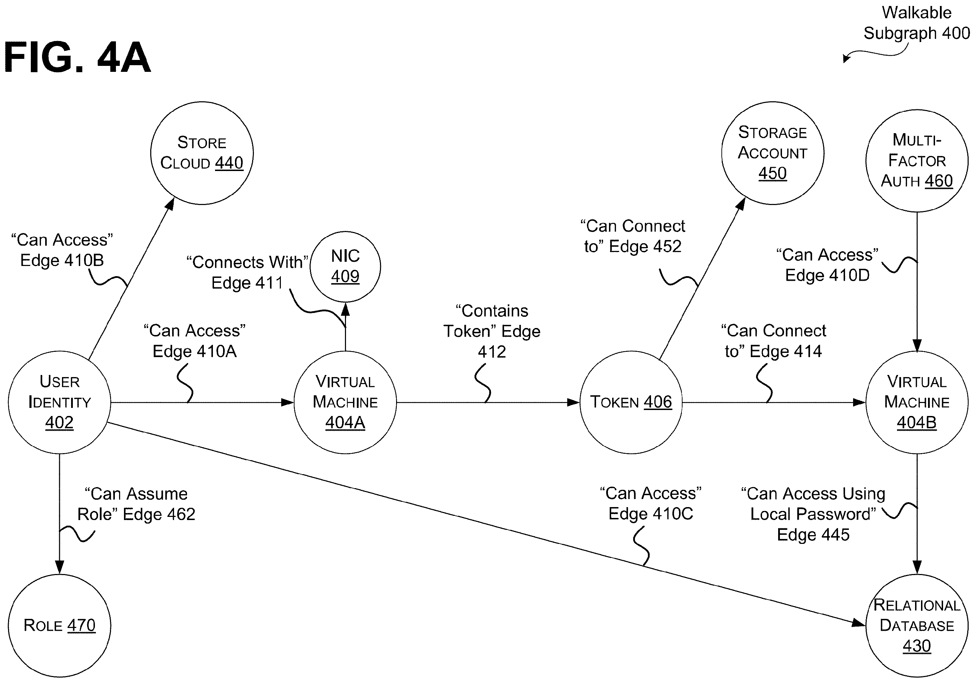

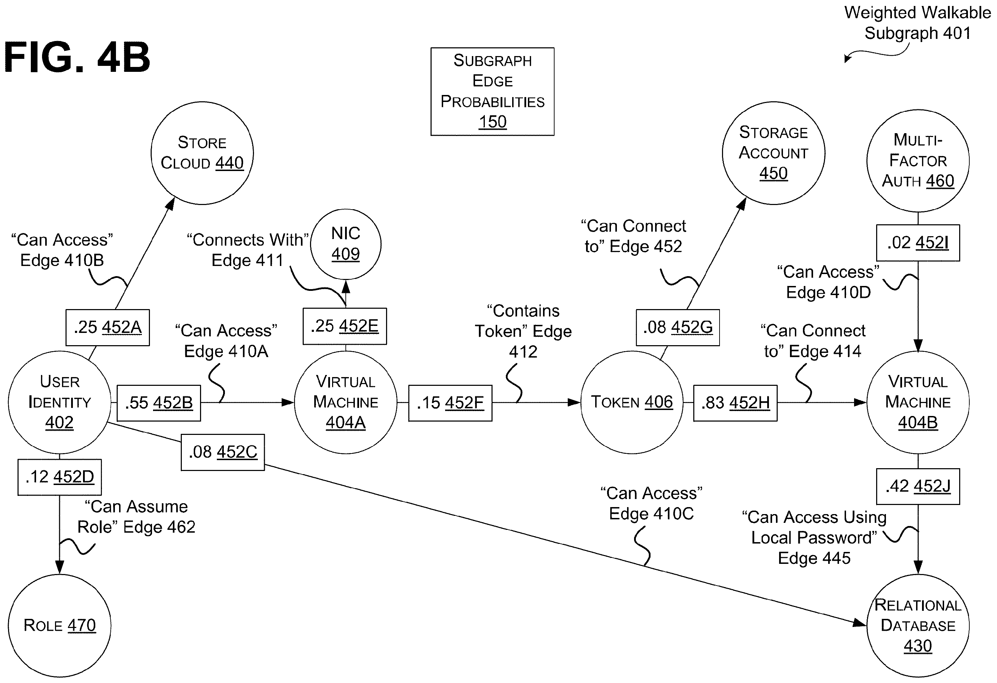

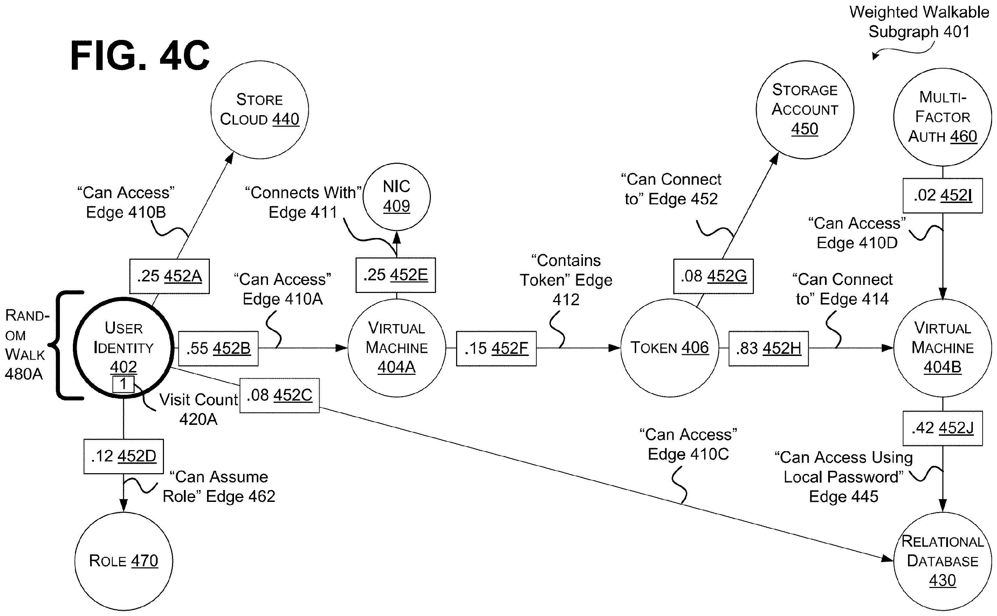

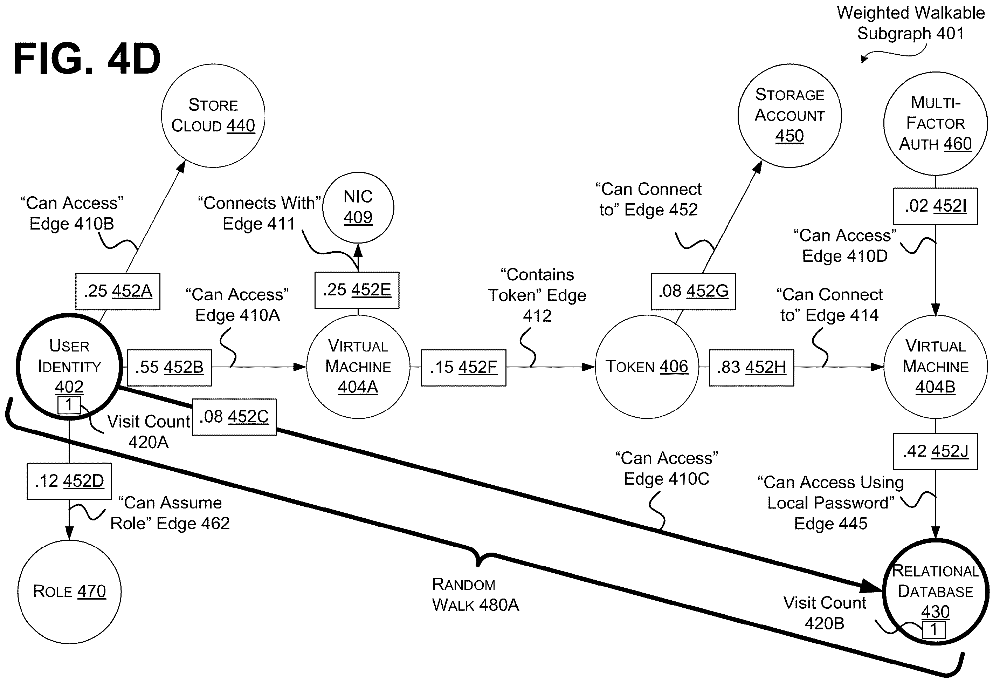

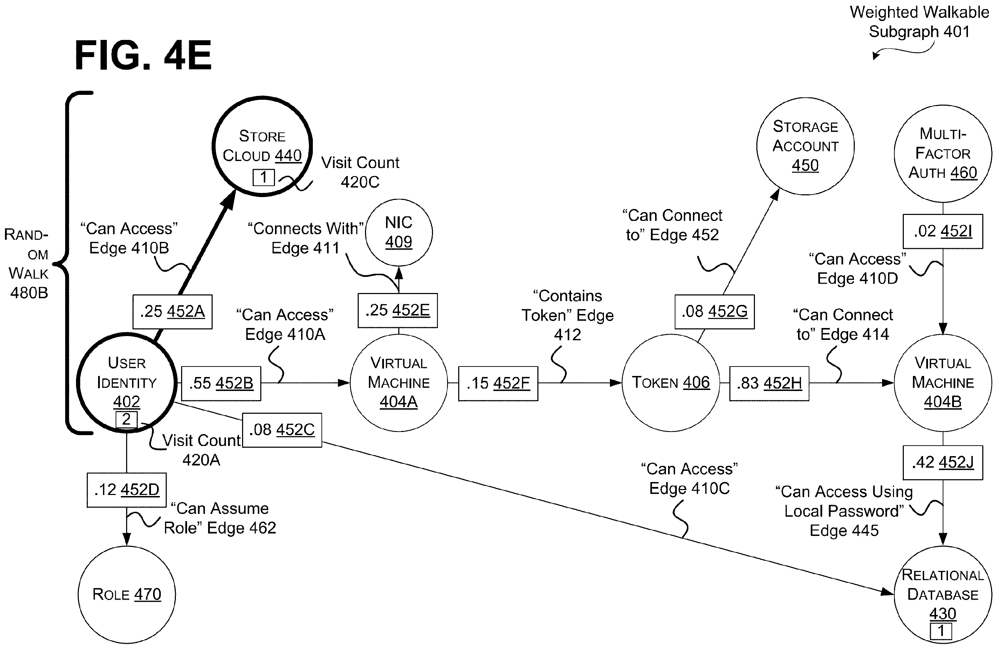

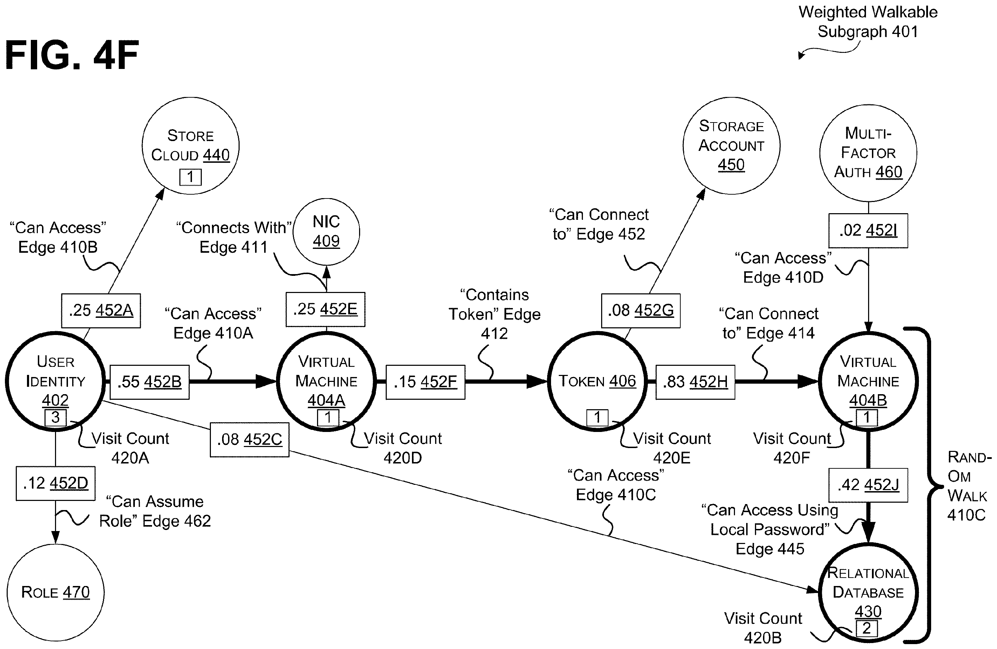

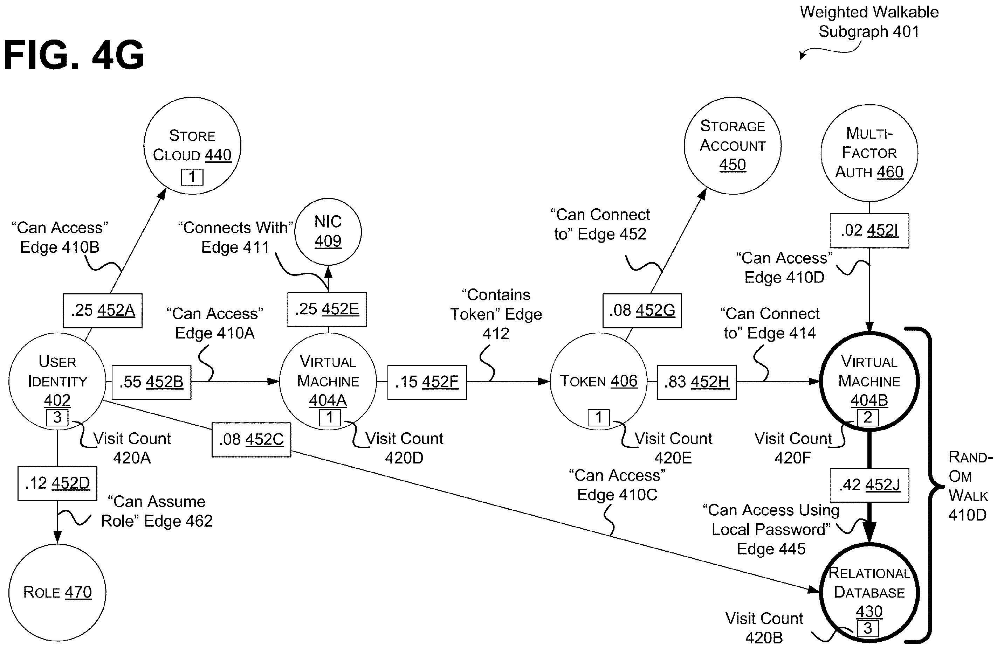

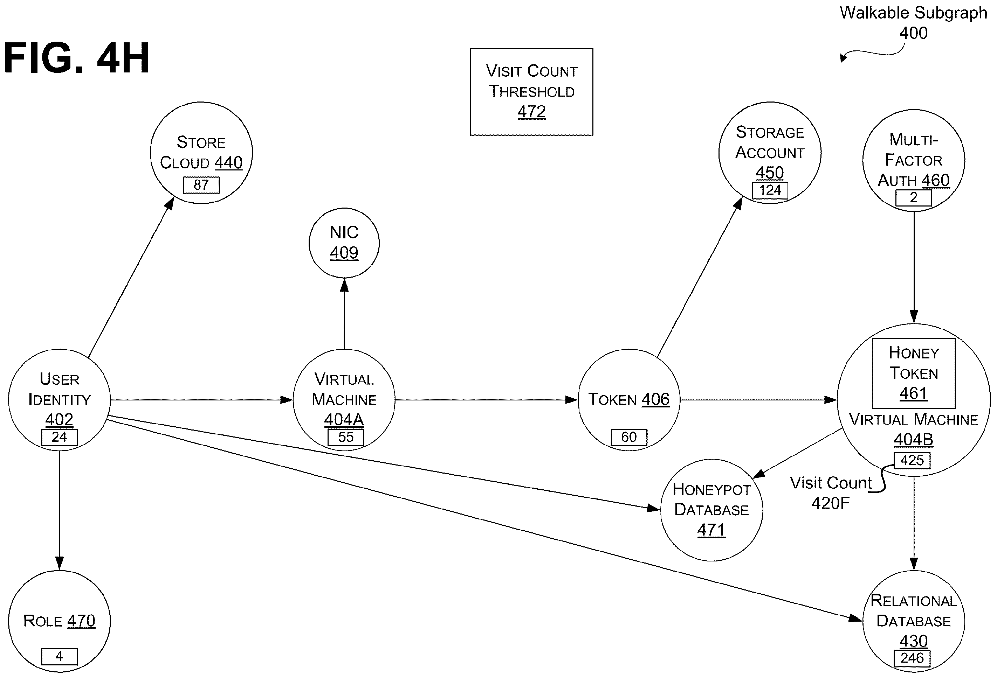

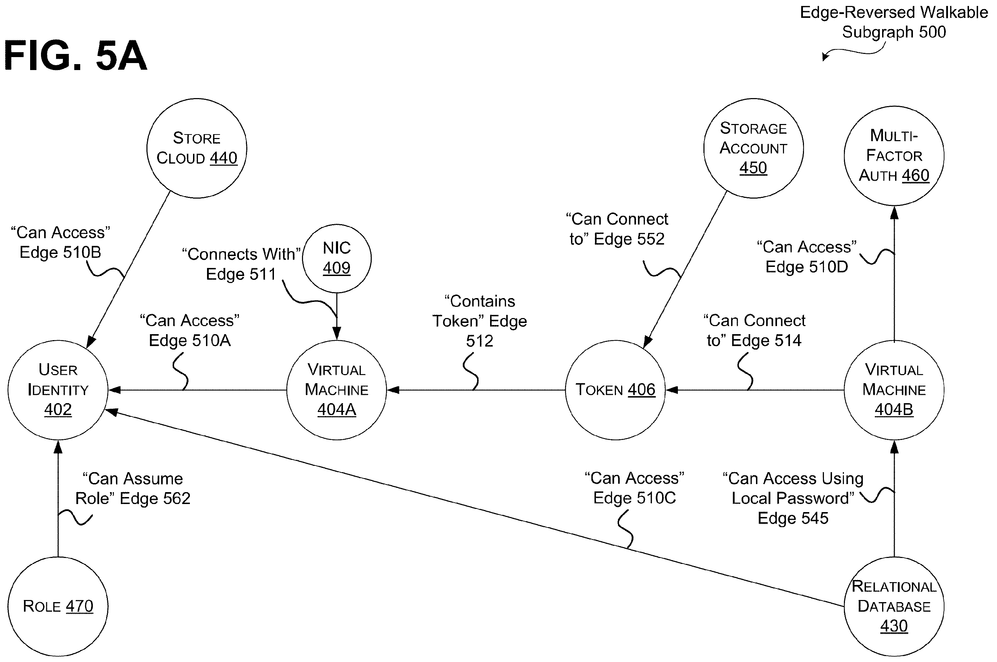

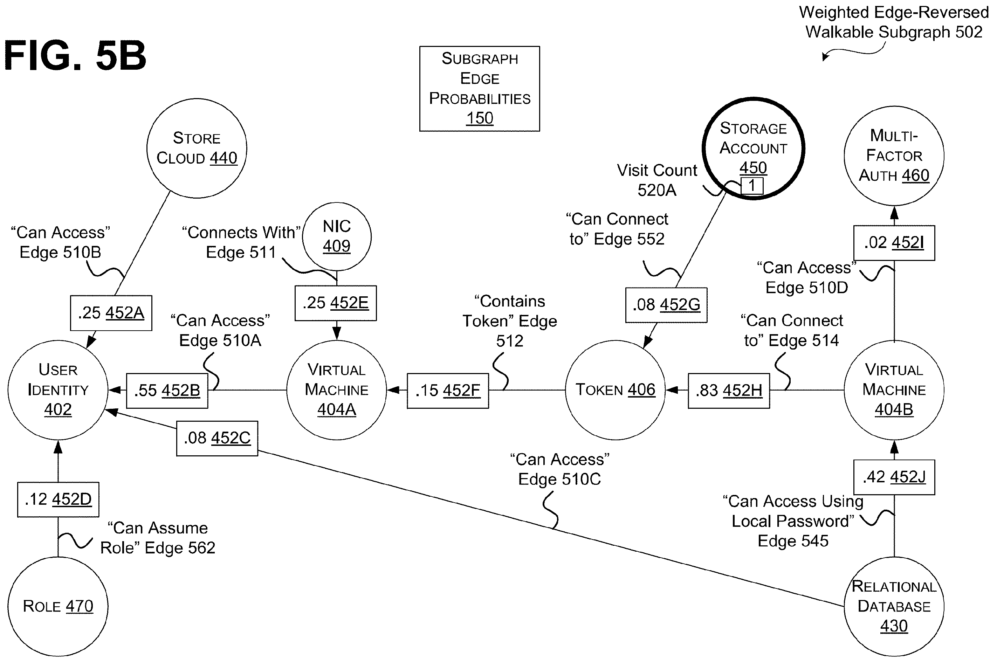

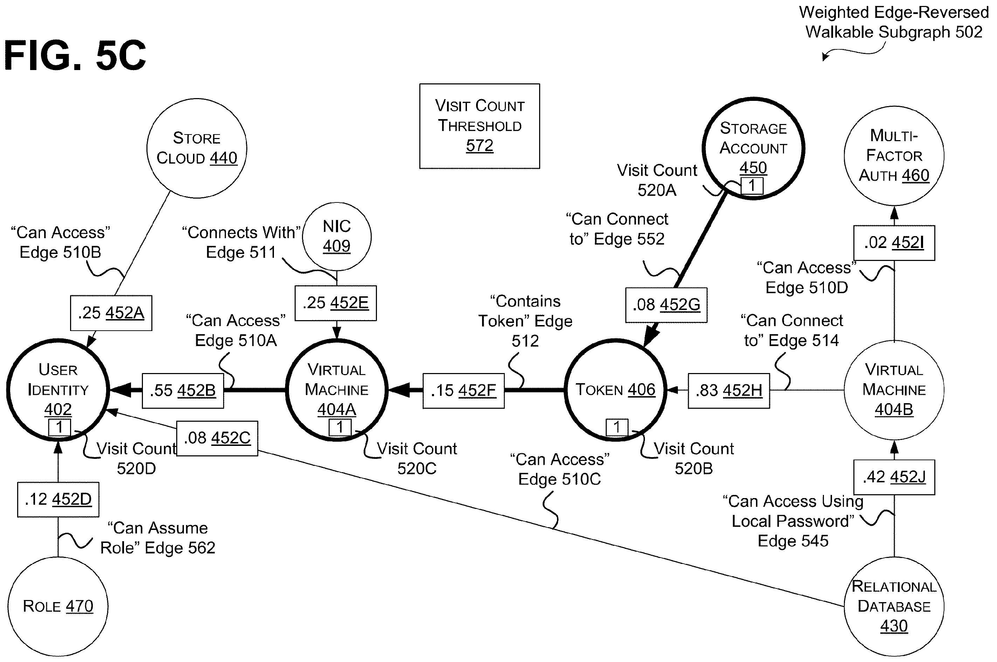

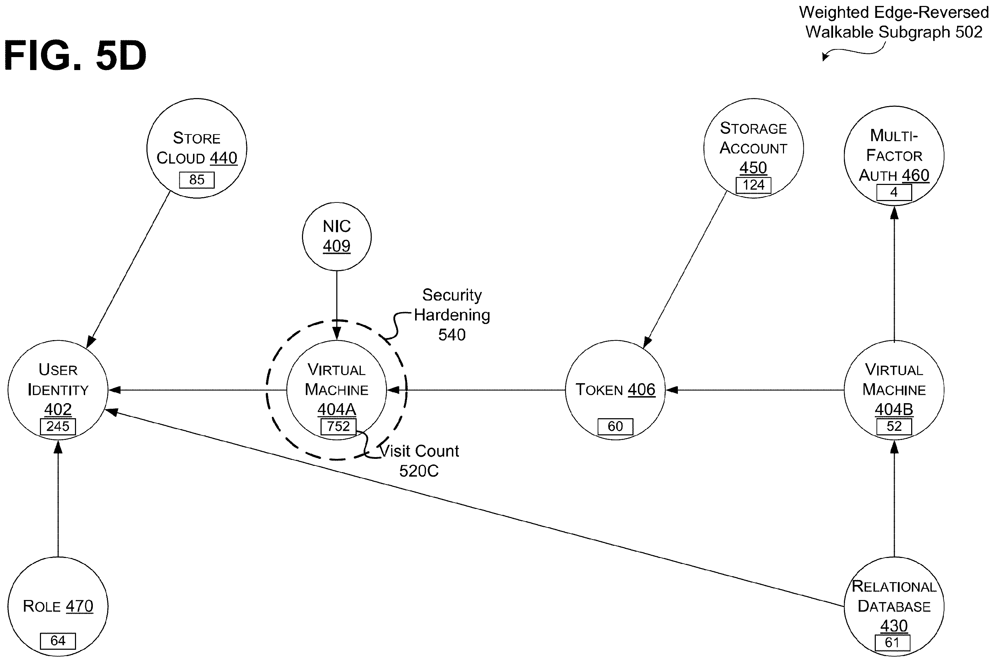

Virtual machine node 304B has one incoming edge, "can access" edge 310D, which indicates that multi-factor authentication 360 can be used to access virtual machine 304B. "can access using local password" edge 345 and "stores data to" edge 343C both connect to relational database 330, indicating that virtual machine 304B can use local login credentials to access relational database 330 and that virtual machine 304B stores data to relational database 330. In the subgraphs described below in conjunction with FIGS. 4 and 5, different subgraphs include different edges between virtual machine 304B and relational database 330.

Store cloud 340 has one outgoing edge, "backs up data to" edge 344, which connects to backup node 342. Backup node 342 refers to a device or service that provides robust storage to backup files, tables, databases, or other types of storage. Backup node 342 may support automatically and periodically backing up data from another node, such as store cloud 340. "Backs up data to" edge 344 indicates that store cloud 340 backs up data to backup 342. Backup 342 has three more incoming edges, which are unlabeled, from blob stores 346A and 346B and table store 348. These nodes are included to illustrate that resource graph 100 includes nodes that are not included in a given subgraph.

FIG. 4A illustrates walkable subgraph 400 of resource graph 100. Walkable subgraph 400 includes a subset of the nodes and edges of resource graph 100 that are relevant to gaining access to additional computing resources. Nodes and edges in walkable subgraph 400 correspond to the nodes and edges of resource graph 100, but are labeled with a first digit of '4' instead of '3'.

As discussed above, a subgraph such as walkable subgraph 400 is constructed by subgraph extraction engine 110. Walkable subgraph 400 may be constructed by selecting subgraph edges 144 from resource graph 100 that pertain to permissions, logging in, and otherwise gaining access to additional computing resources. Additionally, or alternatively, walkable subgraph 400 may be constructed based on any number and combination of criteria, such as selecting particular nodes or node types, particular edge and node combinations and/or adjacencies, periods of time such as time of day, geographic regions, etc. In a cloud environment, edges and nodes may be selected from a particular customer, from a particular data center or multiple data centers, or other groupings or hierarchies.

FIG. 4B illustrates weighted walkable subgraph 401. Weighted walkable subgraph 401 includes the same nodes and edges as walkable subgraph 400, but the edges have been associated with probabilities 452. Probabilities 452 indicate how likely an attacker is to move along a given edge to another node. Probabilities 452 may be normalized, such that the sum of probabilities of the edges leaving a given node is 1. Weighted walkable subgraph 401 may be generated by subgraph edge probability engine 150 as described above in conjunction with FIG. 1.

FIGS. 4C-4G illustrate random walks 480 performed on weighted walkable subgraph 401.

FIG. 4C highlights beginning random walk 480A at node 402. Visit count 420A is incremented to "1", depicting how many times node 402 has been visited by a random walk. In some configurations, visit count 420A is incremented any time any random walk visits node 402.

FIG. 4D illustrates continuing random walk 480A along edge 410C to relational database node 430. Probability 452C indicates that 8% of the time that random walk 480A continues from node 402 it does so along edge 410 to node 430. Visit count 420B records that node 430 has been visited by random walk 480A, incrementing the count to "1".

In some configurations, some stochastic graph traversal algorithms 200 end random walk 480A at any node with a defined probability. For example, at each node in the walk, stochastic graph traversal algorithm 200 may give a 15% chance that random walk 480A ends after the first node, and again a 15% chance that random walk 480A ends after the second node, etc. Additionally, or alternatively, stochastic graph traversal algorithms 200 may end a random walk upon encountering a node without any outgoing edges.

FIG. 4E illustrates random walk 480B, which also begins at node 402 but continues via edge 410B to store cloud node 440. Visit count 420A of node 402 is updated to reflect the two visits to node 402 so far. Visit count 420C of store cloud node 440 is also incremented to a value of '1'.

FIG. 4F illustrates random walk 480C that begins at node 402 and ends at node 430, but which is routed by edges 410A, 412, 414, and 445 through nodes 404A, 406, and 404B.

FIG. 4G illustrates random walk 480D that begins at virtual machine 404B and continues along edge 452J to relational database 430.

FIG. 4H illustrates node visit counts 420 of weighted walkable subgraph 401 after a session of random walks 480 has been completed. Visit count threshold 472 is a configurable value above which a node is considered "central". Visit count threshold 472 may be manually set by an administrator. Additionally, or alternatively, visit count threshold 472 may be automatically adjusted up or down until visit counts of a subgraph converge to a stable pattern. Visit count threshold 472 may be universal or specific to a particular stochastic graph traversal algorithm.

The 'centrality' of a node that has a visit count greater than visit count threshold 472 may have a different meaning for different graph traversal algorithms. For example, central nodes of popularity score algorithm 210 are nodes that tend to eventually be visited during an attack, while central nodes of gateway score algorithm 220 are nodes that tend to be initially compromised in a cyberattack.

FIG. 5A illustrates edge-reversed walkable subgraph 500. Edge-reversed walkable subgraph 500 is constructed by reversing the directions of the edges of walkable subgraph 401. To indicate this change, the numbering of the reversed edges begins with a '5' instead of a '4'. As discussed above in conjunction with FIG. 2B, gateway score algorithm 220 may perform random walks on edge-reversed walkable subgraph 500 to identify nodes that are likely to be an initial node in a cyberattack.

FIGS. 5B-5C illustrate paths discovered by random walks performed on weighted edge-reversed walkable subgraph 500. Visit counts 520 tally how many times each node has been visited by a random walk. Visit count threshold 572, similar to visit count threshold 472 described above and visit count threshold 672 described below, is count above which a node is considered "central". Visit count threshold 572 may be specific to a particular stochastic graph traversal algorithm, while centrality may have different meanings for different graph traversal algorithms.

FIG. 5D illustrates how many times nodes of weighted edge-reversed walkable subgraph 500 were visited during random walks. Virtual machine 404A has been identified as a particularly likely entry point for a cyberattack. In response, device hardening engine 224 has applied a security operation of security hardening 540 to virtual machine 404A. Security hardening 540 may be an added requirement to use more secure login technology, such as multi-factor authentication. Security hardening 540 may also expunge cached credentials or other tokens that may be used by an attacker to gain access to other computing resources.

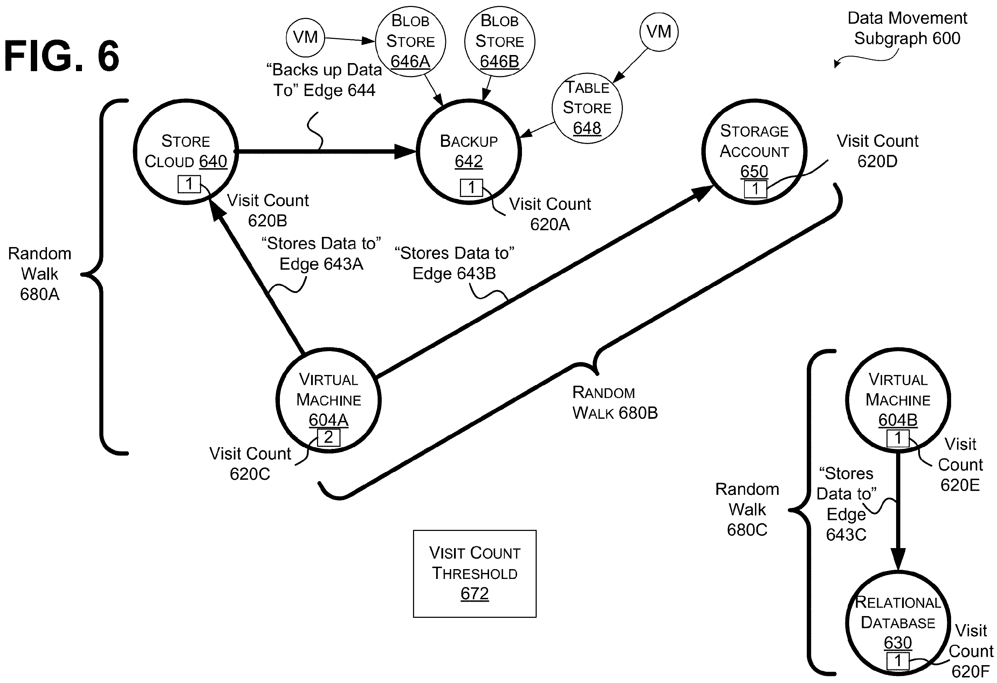

FIG. 6 illustrates data movement subgraph 600. Data movement subgraph 600 is another subgraph extracted from resource graph 100. Data movement subgraph 600 includes edges relevant to data storage, backups, and other data flows. To highlight the selection of these different types of edges and nodes, the nodes and edges of data movement subgraph 600 have the same names and reference characters as the corresponding nodes and edges in resource graph 100, but the first number is a '6' instead of a '3'. FIG. 6 illustrates three random walks 680. Each step along a random walk increments visit count 620 of the most recently visited node. Visit count threshold 672 is a per stochastic graph traversal algorithm count, above which a node is considered "central".

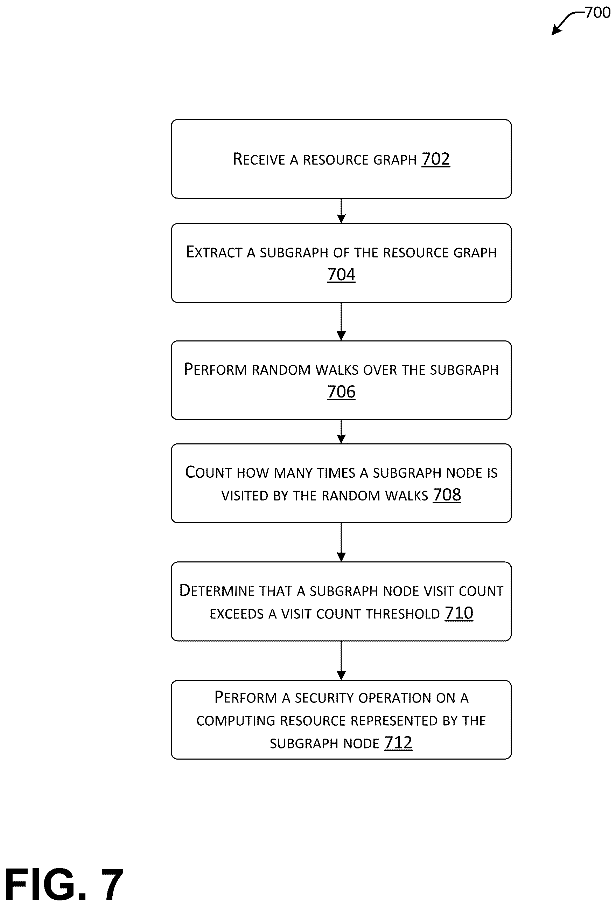

With reference to FIG. 7, routine 700 begins at operation 702, where resource graph 100 is received. Resource graph 100 may represent corporate computing infrastructure, cloud computing infrastructure, or any other collection of computing devices that are accessible to one another.

Next at operation 704, a subgraph 140, such as walkable subgraph 400 or data movement subgraph 600, is extracted from resource graph 100. Subgraph 140 may be identified or constructed by selecting subgraph edges 144 from edges 114 of resource graph 100. For example, subgraph extraction criteria 118 may list specific types of edges to extract from edges 114 for a particular subgraph 140.

Next at operation 706, a random walk 480 is made over subgraph 140. In some configurations, random walks 480 are iteratively performed over subgraph 140 to identify paths. Different algorithms may be used, such as popularity score algorithm 210 that generates random walks so as to determine node popularity ranking 212.

Next at operation 708, the number of times one of random walks 480 visits a particular node 162 of subgraph 160 is computed. These counts can be made in real-time as paths are stochastically discovered in subgraph 160.

Next at operation 710, a determination is made that the visit count 420 of a particular node 162 exceeds centrality threshold 206, such as visit count threshold 472, 572, or 672. In some configurations, centrality threshold 206 is a predefined value that is particular to the type of subgraph being analyzed. Additionally, or alternatively, centrality threshold 206 may be defined dynamically based on the visit counts of other nodes in subgraph 140.

Next at operation 712, security operation 208 is performed on one or more subgraph nodes 162 of subgraph 160 that have visit counts 420 that exceed centrality threshold 206. Security operation 208 may include, for example, placing a honeypot 471 or honeytoken 461, automatically hardening the security of a computing resource, generating a security alert, and/or modifying a priority of a list of existing security alerts.

The particular implementation of the technologies disclosed herein is a matter of choice dependent on the performance and other requirements of a computing device. Accordingly, the logical operations described herein are referred to variously as states, operations, structural devices, acts, or modules. These states, operations, structural devices, acts, and modules can be implemented in hardware, software, firmware, in special-purpose digital logic, and any combination thereof. It should be appreciated that more or fewer operations can be performed than shown in the figures and described herein. These operations can also be performed in a different order than those described herein.

It also should be understood that the illustrated methods can end at any time and need not be performed in their entireties. Some or all operations of the methods, and/or substantially equivalent operations, can be performed by execution of computer-readable instructions included on a computer-storage media, as defined below. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like.

Thus, it should be appreciated that the logical operations described herein are implemented (1) as a sequence of computer implemented acts or program modules running on a computing system and/or (2) as interconnected machine logic circuits or circuit modules within the computing system. The implementation is a matter of choice dependent on the performance and other requirements of the computing system. Accordingly, the logical operations described herein are referred to variously as states, operations, structural devices, acts, or modules. These operations, structural devices, acts, and modules may be implemented in software, in firmware, in special purpose digital logic, and any combination thereof.

For example, the operations of the routine 700 are described herein as being implemented, at least in part, by modules running the features disclosed herein can be a dynamically linked library (DLL), a statically linked library, functionality produced by an application programing interface (API), a compiled program, an interpreted program, a script or any other executable set of instructions. Data can be stored in a data structure in one or more memory components. Data can be retrieved from the data structure by addressing links or references to the data structure.

Although the following illustration refers to the components of the figures, it should be appreciated that the operations of the routine 700 may be also implemented in many other ways. For example, the routine 700 may be implemented, at least in part, by a processor of another remote computer or a local circuit. In addition, one or more of the operations of the routine 700 may alternatively or additionally be implemented, at least in part, by a chipset working alone or in conjunction with other software modules. In the example described below, one or more modules of a computing system can receive and/or process the data disclosed herein. Any service, circuit or application suitable for providing the techniques disclosed herein can be used in operations described herein.

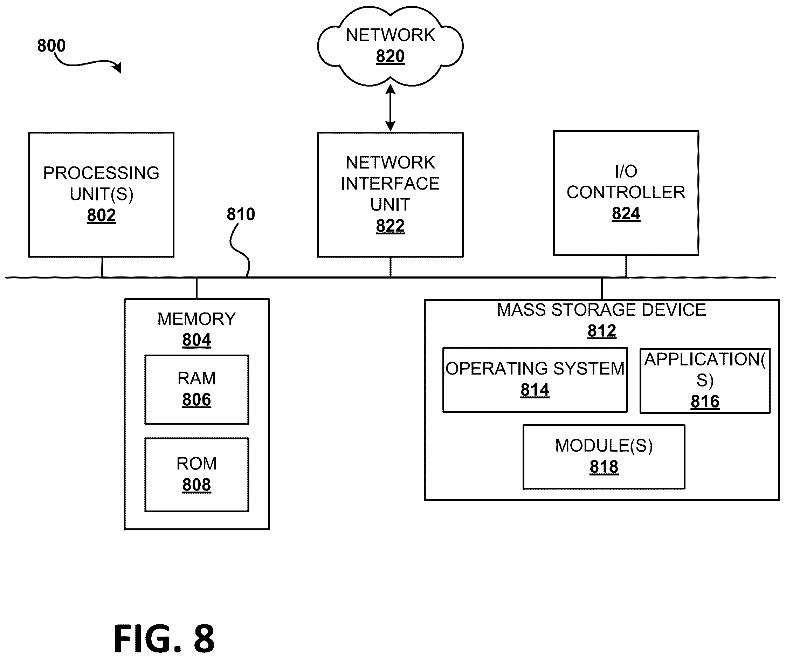

FIG. 8 shows additional details of an example computer architecture 800 for a device, such as a computer or a server configured as part of the systems described herein, capable of executing computer instructions (e.g., a module or a program component described herein). The computer architecture 800 illustrated in FIG. 8 includes processing unit(s) 802, a system memory 804, including a random-access memory 806 ("RAM") and a read-only memory ("ROM") 808, and a system bus 810 that couples the memory 804 to the processing unit(s) 802.

Processing unit(s), such as processing unit(s) 802, can represent, for example, a CPU-type processing unit, a GPU-type processing unit, a neural processing unit, a field-programmable gate array (FPGA), another class of digital signal processor (DSP), or other hardware logic components that may, in some instances, be driven by a CPU. For example, and without limitation, illustrative types of hardware logic components that can be used include Application-Specific Integrated Circuits (ASICs), Application-Specific Standard Products (ASSPs), System-on-a-Chip Systems (SOCs), Complex Programmable Logic Devices (CPLDs), etc.

A basic input/output system containing the basic routines that help to transfer information between elements within the computer architecture 800, such as during startup, is stored in the ROM 808. The computer architecture 800 further includes a mass storage device 812 for storing an operating system 814, application(s) 816, modules 818, and other data described herein.

The mass storage device 812 is connected to processing unit(s) 802 through a mass storage controller connected to the bus 810. The mass storage device 812 and its associated computer-readable media provide non-volatile storage for the computer architecture 800. Although the description of computer-readable media contained herein refers to a mass storage device, it should be appreciated by those skilled in the art that computer-readable media can be any available computer-readable storage media or communication media that can be accessed by the computer architecture 800.

Computer-readable media can include computer-readable storage media and/or communication media. Computer-readable storage media can include one or more of volatile memory, nonvolatile memory, and/or other persistent and/or auxiliary computer storage media, removable and non-removable computer storage media implemented in any method or technology for storage of information such as computer-readable instructions, data structures, program modules, or other data. Thus, computer storage media includes tangible and/or physical forms of media included in a device and/or hardware component that is part of a device or external to a device, including but not limited to random access memory (RAM), static random-access memory (SRAM), dynamic random-access memory (DRAM), phase change memory (PCM), read-only memory (ROM), erasable programmable read-only memory (EPROM), electrically erasable programmable read-only memory (EEPROM), flash memory, compact disc read-only memory (CD-ROM), digital versatile disks (DVDs), optical cards or other optical storage media, magnetic cassettes, magnetic tape, magnetic disk storage, magnetic cards or other magnetic storage devices or media, solid-state memory devices, storage arrays, network attached storage, storage area networks, hosted computer storage or any other storage memory, storage device, and/or storage medium that can be used to store and maintain information for access by a computing device.

In contrast to computer-readable storage media, communication media can embody computer-readable instructions, data structures, program modules, or other data in a modulated data signal, such as a carrier wave, or other transmission mechanism. As defined herein, computer storage media does not include communication media. That is, computer-readable storage media does not include communications media consisting solely of a modulated data signal, a carrier wave, or a propagated signal, per se.

According to various configurations, the computer architecture 800 may operate in a networked environment using logical connections to remote computers through the network 820. The computer architecture 800 may connect to the network 820 through a network interface unit 822 connected to the bus 810. The computer architecture 800 also may include an input/output controller 824 for receiving and processing input from a number of other devices, including a keyboard, mouse, touch, or electronic stylus or pen. Similarly, the input/output controller 824 may provide output to a display screen, a printer, or other type of output device.

It should be appreciated that the software components described herein may, when loaded into the processing unit(s) 802 and executed, transform the processing unit(s) 802 and the overall computer architecture 800 from a general-purpose computing system into a special-purpose computing system customized to facilitate the functionality presented herein. The processing unit(s) 802 may be constructed from any number of transistors or other discrete circuit elements, which may individually or collectively assume any number of states. More specifically, the processing unit(s) 802 may operate as a finite-state machine, in response to executable instructions contained within the software modules disclosed herein. These computer-executable instructions may transform the processing unit(s) 802 by specifying how the processing unit(s) 802 transition between states, thereby transforming the transistors or other discrete hardware elements constituting the processing unit(s) 802.

The present disclosure is supplemented by the following example clauses:
Example 1: A method comprising: receiving a resource graph comprising a plurality of nodes that represent a plurality of computing resources and a plurality of edges that represent a plurality of connections between the plurality of computing resources; extracting a subgraph of the resource graph; performing a plurality of random walks of the subgraph; computing a visit count of a subgraph node of the subgraph caused by the plurality of random walks; determining that the visit count of the subgraph node exceeds a visit count threshold; and performing a security operation on a computing resource represented by the subgraph node.
Example 2: The method of example 1, wherein the subgraph is extracted from the resource graph by selecting edges and adjoining nodes from the resource graph that meet a defined criteria.
Example 3: The method of example 2, wherein the defined criteria identifies edges that represent permissions or authentication.
Example 4: The method of example 2 or example 3, wherein the defined criteria identifies edges that route data between the plurality of computing resources.
Example 5: The method of examples 1 to 4, wherein the plurality of random walks generate a plurality of paths through the subgraph.
Example 6: The method of examples 1 to 5, further comprising: weighting at least one of a plurality of subgraph edges of the subgraph, wherein a next edge of an individual random walk is selected at random according to the relative weights of subgraph edges leaving an individual node.
Example 7: The method of examples 1 to 6, wherein the plurality of random walks of the subgraph are identified by iteratively performing one of at least two operations from an individual node of the subgraph: traversing an outgoing subgraph edge of the given node to a destination node, wherein the outgoing subgraph edge is selected probabilistically based on subgraph edge weights, and wherein the destination node becomes the given node; or selecting a different node of the subgraph as the given node.
Example 8: The method of example 7, wherein the different node of the subgraph is selected with a bias towards one or more particular nodes of the subgraph.
Example 9: A system comprising: a processing unit; and a non-transitory computer-readable storage medium having computer-executable instructions stored thereupon, which, when executed by the processing unit, cause the processing unit to: receive a resource graph comprising a plurality of nodes that represent a plurality of computing resources and a plurality of edges that represent a plurality of connections between the plurality of computing resources; extract a subgraph of the resource graph by selecting edges of the resource graph that allow lateral movement between devices of the plurality of computing resources; perform a plurality of random walks on the subgraph; computing a visit count of a subgraph node of the subgraph caused by the plurality of random walks; determine that the visit count of the subgraph node exceeds a visit count threshold; and perform a security operation on a computing resource represented by the subgraph node.
Example 10: The system of example 9, wherein the random walks are biased to begin at a compromised node of the subgraph, wherein the compromised node of the subgraph represents a compromised device of the plurality of computing resources, and wherein the subgraph node is identified as a source of intrusion that lead to the compromised device becoming compromised.
Example 11: The system of example 9 or example 10, wherein the security operation comprises sending an alert indicating the subgraph node is likely to be compromised during a future cyberattack.
Example 12: The system of examples 9 to 11, wherein the security operation comprises adjusting a security policy of the computing resource represented by the subgraph node.
Example 13: The system of examples 9 to 12, wherein the security operation comprises deploying a honeytoken to the computing resource represented by the subgraph node.
Example 14: The system of examples 9 to 13, wherein a plurality of subgraph edges of the subgraph have a direction, and wherein the computer-executable instructions further cause the processing unit to: reverse the direction of the plurality of subgraph edges, wherein the computing resource represented by the subgraph node comprises a likely initial point of intrusion for a cyberattack.
Example 15: The system of examples 9 to 14, wherein the security operation comprises hardening the computing resource represented by the subgraph node against intrusion.
Example 16: A non-transitory computer-readable storage medium having encoded thereon computer-readable instructions that when executed by a processing unit causes a system to: receive a resource graph comprising a plurality of nodes that represent a plurality of computing resources and a plurality of edges that represent a plurality of connections between the plurality of computing resources; extract a subgraph of the resource graph by selecting edges of the resource graph that route data between devices of the plurality of computing resources; perform a plurality of random walks on the subgraph; compute a visit count of a subgraph node of the subgraph caused by the plurality of random walks; determine that the visit count of the subgraph node exceeds a visit count threshold; and perform a security operation on a computing resource represented by the subgraph node.
Example 17: The computer-readable storage medium of example 16, wherein the security operation encrypts data stored on the computing resource represented by the subgraph node.
Example 18: The computer-readable storage medium of example 16 or example 17, wherein the computer-readable instructions further cause the processing unit to: rank a plurality of subgraph nodes by number of visitations, wherein random walks are performed until the subgraph node rankings remain stable within a defined threshold for a defined amount of time.
Example 19: The computer-readable storage medium of examples 16 to 18, wherein data moved through the plurality of computing resources during a cyberattack is determined to have at least a defined probability of being stored at the computing resource represented by the subgraph node.
Example 20: The computer-readable storage medium of examples 16 to 19, wherein the instructions further cause the processing unit to: identify a plurality of subgraph nodes with individual visit counts greater than the visit count threshold; and identify computing resources corresponding to the plurality of subgraph nodes as being likely to be infected by a computer virus that has been introduced to the plurality of computing resources.

Disclosed are techniques for determining the probability that a computing resource will be compromised during a cyberattack. In some configurations, a collection of computing resources is modeled with a resource graph. Computing resources are represented by nodes while connections between computing resources are represented by edges. Random walks are performed through the resource graph. Different random walk algorithms may be applied to identify different properties of the resource graph. For example, nodes that are visited frequently by the random walks may correspond to computing resources that are likely to be compromised during a cyberattack. Various security operations may be performed in response to determining that a computing resource is likely to be compromised, including increased security measures, introduction of honeypots or honeytokens, sending or prioritizing security alerts, etc.

While certain example embodiments have been described, these embodiments have been presented by way of example only and are not intended to limit the scope of the inventions disclosed herein. Thus, nothing in the foregoing description is intended to imply that any particular feature, characteristic, step, module, or block is necessary or indispensable. Indeed, the novel methods and systems described herein may be embodied in a variety of other forms; furthermore, various omissions, substitutions and changes in the form of the methods and systems described herein may be made without departing from the scope of the claims. The accompanying claims and their equivalents are intended to cover such forms or modifications as would fall within the scope of certain of the inventions disclosed herein.

It should be appreciated that any reference to "first," "second," etc. elements within the Summary and/or Detailed Description is not intended to and should not be construed to necessarily correspond to any reference of "first," "second," etc. elements of the claims. Rather, any use of "first" and "second" within the Summary, Detailed Description, and/or claims may be used to distinguish between two different instances of the same element.

In closing, although the various techniques have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

## Claims

1. A method comprising:
receiving (702) a resource graph comprising a plurality of nodes that represent a plurality of computing resources and a plurality of edges that represent a plurality of connections (104) between the plurality of computing resources;
extracting (704) a subgraph of the resource graph;
performing (706) a plurality of random walks of the subgraph;
computing (708) a visit count of a subgraph node of the subgraph caused by the plurality of random walks;
determining (710) that the visit count of the subgraph node exceeds a visit count threshold; and
performing (712) a security operation on a computing resource represented by the subgraph node.

2. The method of claim 1, wherein the subgraph is extracted from the resource graph by selecting edges and adjoining nodes from the resource graph that meet a defined criteria.

3. The method of claim 2, wherein the defined criteria identifies edges that represent permissions or authentication and/or edges that route data between the plurality of computing resources.

4. The method of any one of preceding claims, wherein the plurality of random walks generate a plurality of paths through the subgraph.

5. The method of any one of preceding claims, further comprising:
weighting at least one of a plurality of subgraph edges of the subgraph, wherein a next edge of an individual random walk is selected at random according to the relative weights of subgraph edges leaving an individual node.

6. The method of any one of preceding claims, wherein the plurality of random walks of the subgraph are identified by iteratively performing one of at least two operations from an individual node of the subgraph:
traversing an outgoing subgraph edge of the given node to a destination node, wherein the outgoing subgraph edge is selected probabilistically based on subgraph edge weights, and wherein the destination node becomes the given node; or
selecting a different node of the subgraph as the given node.

7. The method of claim 6, wherein the different node of the subgraph is selected with a bias towards one or more particular nodes of the subgraph.

8. A system comprising:
a processing unit (802); and
a non-transitory computer-readable storage medium having computer-executable instructions stored thereupon, which, when executed by the processing unit, cause the processing unit to:
receive a resource graph (100) comprising a plurality of nodes that represent a plurality of computing resources (102) and a plurality of edges that represent a plurality of connections (104) between the plurality of computing resources (102);
extract a subgraph (400) of the resource graph (100) by selecting edges (314, 345) of the resource graph (100) that allow lateral movement between devices (106) of the plurality of computing resources (102);
perform a plurality of random walks (480) on the subgraph (400);
computing a visit count (420) of a subgraph node (142) of the subgraph (400) caused by the plurality of random walks (480);
determine that the visit count (420) of the subgraph node (440) exceeds a visit count threshold (472); and
perform a security operation (208) on a computing resource (102) represented by the subgraph node (440).

9. The system of claim 8, wherein the random walks are biased to begin at a compromised node of the subgraph, wherein the compromised node of the subgraph represents a compromised device of the plurality of computing resources, and wherein the subgraph node is identified as a source of intrusion that lead to the compromised device becoming compromised.

10. The system of claim 8 or claim 9, wherein the security operation comprises at least one of:
sending an alert indicating the subgraph node is likely to be compromised during a future cyberattack;
adjusting a security policy of the computing resource represented by the subgraph node; and
deploying a honeytoken to the computing resource represented by the subgraph node.

11. The system of any one of claims 8 to 10, wherein a plurality of subgraph edges of the subgraph have a direction, and wherein the computer-executable instructions further cause the processing unit to:
reverse the direction of the plurality of subgraph edges, wherein the computing resource represented by the subgraph node comprises a likely initial point of intrusion for a cyberattack.

12. The system of any one of claims 8 to 11, wherein the security operation comprises hardening the computing resource represented by the subgraph node against intrusion.

13. A non-transitory computer-readable storage medium having encoded thereon computer-readable instructions that when executed by a processing unit causes a system to:
receive a resource graph (100) comprising a plurality of nodes that represent a plurality of computing resources (102) and a plurality of edges that represent a plurality of connections (104) between the plurality of computing resources (102);
extract a subgraph (600) of the resource graph (100) by selecting edges (343, 344) of the resource graph (100) that route data between devices (106) of the plurality of computing resources (102);
perform a plurality of random walks (680) on the subgraph (600);
compute a visit count (620) of a subgraph node (642) of the subgraph (600) caused by the plurality of random walks (680);
determine that the visit count (620) of the subgraph node (642) exceeds a visit count threshold (672); and
perform a security operation (208) on a computing resource (102) represented by the subgraph node (642).

14. The computer-readable storage medium of claim 13, wherein the security operation encrypts data stored on the computing resource represented by the subgraph node.

15. The computer-readable storage medium of claim 13 or claim 14, wherein the computer-readable instructions further cause the processing unit to:
rank a plurality of subgraph nodes by number of visitations, wherein random walks are performed until the subgraph node rankings remain stable within a defined threshold for a defined amount of time; and/or
identify a plurality of subgraph nodes with individual visit counts greater than the visit count threshold and identify computing resources corresponding to the plurality of subgraph nodes as being likely to be infected by a computer virus that has been introduced to the plurality of computing resources.
